# DEMANDE DE BREVET EUROPEEN

(11) **EP 3 741 581 A1**
(43) Date de publication de la demande: **25.11.2020**
(21) Numéro de dépôt: 20176166.5
(22) Date de dépôt: 22.05.2020
(51) Int. Cl.: B44B 5/02, B44C 1/22, B29C 33/42, B23K 26/352, B23K 101/00, B23K 101/20

(54) **PROCÉDÉ DE MODIFICATION DE L'EMPREINTE D'UN MOULE POUR PIÈCES DE CARROSSERIE**

(30) Priorité: 24.05.2019 FR 1905511; 17.12.2019 FR 1914692
(71) Demandeur: Compagnie Plastic Omnium, 69007 Lyon (FR)
(72) Inventeur: CORNET, Olivier, 01150 Sainte-Julie (FR); TORRES, Olivier, 01150 Sainte-Julie (FR)
(74) Mandataire: LLR

(57) **Abrégé**

L'invention concerne un procédé de modification d'une empreinte d'un moule (2) pour pièces de carrosserie (6), dans lequel on réalise au moins un bossage (12) par grainage laser à la surface de l'empreinte du moule, le bossage (12) étant agencé pour obtenir une pièce de carrosserie (6) comprenant une dépression (14) s'étendant au moins en partie verticalement et/ou horizontalement lorsque la pièce de carrosserie (6) est montée sur un véhicule automobile.

## Description

L'invention concerne la fabrication de pièces de carrosserie et plus précisément les moules utilisés pour fabriquer de telles pièces.

Certaines pièces de carrosserie comprennent à leur surface un ou plusieurs motifs réalisés directement sur la pièce, c'est-à-dire que ce motif ne se présente pas sous la forme d'un composant rapporté sur la pièce. Il est par exemple possible de faire apparaître un tel motif sur la pièce en modifiant localement l'état de surface de la pièce pour obtenir un effet optique accentué (par exemple une impression de profondeur) et/ou en modifiant la matité de cette dernière.

Concernant la modification de l'état de surface, il est possible d'obtenir une ou plusieurs zones d'aspect différent par un ou plusieurs traitements de surface de type grainage, par exemple un grainage par attaque chimique, tout en protégeant les autres zones en les masquant.

Il est par exemple possible de procéder à un grainage du moule, ce qui conduit à un grainage sur la surface de la pièce qui est injectée dans ce dernier afin d'obtenir une pièce ayant un état de surface particulier. Ce procédé engendre un grainage sur une grande surface ou sur la totalité de la surface du moule.

Concernant l'obtention de zones plus mates sur une pièce de carrosserie, il est possible de sabler ou de projeter des billes sur une zone du moule servant à la réalisation de la pièce afin d'en moduler, diminuer ou augmenter la brillance.

Cependant, ces solutions ne sont pas acceptables pour des zones de petite superficie qui sont localisées à côté de zones de la pièce de carrosserie à ne pas modifier car elles ne sont pas assez précises, en plus des difficultés rencontrées pour masquer des zones ne devant pas être modifiées pour ne laisser exposer que des zones de petite superficie.

L'invention a notamment pour but de fournir un procédé permettant d'obtenir une pièce de carrosserie comprenant au moins un motif ayant un effet optique accentué mais également une certaine matité et cela de manière plus simple et plus rapide que les procédés selon l'art antérieur, tout en sélectionnant très précisément les zones dans lesquelles l'état de surface et/ou la matité sont modifiés.

A cet effet l'invention a pour objet un procédé de modification d'une empreinte d'un moule pour pièces de carrosserie, dans lequel on réalise au moins un bossage par grainage laser à la surface de l'empreinte du moule, caractérisé en ce que le bossage est agencé pour obtenir une pièce de carrosserie comprenant une dépression s'étendant au moins en partie verticalement et/ou horizontalement lorsque la pièce de carrosserie est montée sur un véhicule automobile.

Ainsi, on obtient un moule dont l'empreinte comprend au moins un bossage présent à la surface de l'empreinte du moule. Une pièce de carrosserie moulée dans ce dernier comprendra une ou plusieurs dépressions (correspondant au bossage réalisé par grainage laser). Ces dépressions peuvent être linéaires et s'étendre dans une ou plusieurs directions formant un angle compris entre 0° et 90° avec, par exemple, un axe vertical Z du véhicule. Cela permet, en fonction de la direction d'extension, d'obtenir un effet optique particulier. Par exemple, les parties de ces dépressions s'étendant verticalement sur la pièce montée sur un véhicule constituent un piège à lumière, ce qui va accentuer l'effet de profondeur du motif. A l'inverse, les parties de ces dépressions s'étendant horizontalement sur la pièce montée sur un véhicule réfléchissent énormément la lumière ce qui permet de diminuer fortement l'impression de profondeur du motif. Cela évite de devoir réaliser un moule comprenant des reliefs et dépressions trop importants en ne réalisant que des bossages de faible profondeur, ce qui augmente les temps de cycle et les risques de défauts d'aspect sur les pièces moulées. Le grainage laser permet de réaliser le ou les bossages avec une grande précision afin d'obtenir le ou les effets optiques recherchés et ce quelle que soit la taille de la zone.

De plus, le grainage laser de l'empreinte du moule permet d'obtenir un motif régulier, répétitif et réalisé avec une grande précision.

On obtient par conséquent une empreinte de moule avec des bossages réalisés de manière très précise et étant de faible profondeur mais conférant à une pièce réalisée dans ce moule des zones dans lesquelles l'impression de profondeur est accentuée ou diminuée tout comme la matité de ces zones.

Le procédé selon l'invention peut en outre comprendre une ou plusieurs des caractéristiques suivantes :
- le bossage a la forme de lignes agencées pour obtenir une pièce de carrosserie sur laquelle la dépression à la forme de lignes horizontales et/ou verticales lorsque la pièce de carrosserie est montée sur un véhicule automobile,
- on réalise, avant le grainage laser, au moins une cavité dans l'empreinte du moule, le grainage laser étant réalisé à la surface d'au moins un relief de l'empreinte du moule.
- la cavité a une profondeur comprise entre 0,1 millimètre et 1,5 millimètre,
- l'étape de grainage est un second grainage et le bossage est un second bossage, le procédé comprenant entre la réalisation de la cavité et celle du second bossage une étape de réalisation par grainage d'un premier bossage dans l'empreinte du moule,
- le premier bossage est réalisé sur l'intégralité de l'empreinte du moule,
- les deux étapes de grainage sont réalisées dans une même zone de l'empreinte du moule,
- les deux étapes de grainage sont réalisées dans des zones différentes de l'empreinte du moule,
- la première étape de grainage est réalisée par grainage chimique ou par électroérosion.

L'invention concerne également un moule pour pièces de carrosserie comprenant au moins un bossage réalisé par gravure laser, le bossage étant agencé pour obtenir une pièce de carrosserie comprenant une dépression s'étendant au moins en partie verticalement et/ou horizontalement lorsque la pièce de carrosserie est montée sur un véhicule automobile.

Le moule selon l'invention peut en outre comprendre une ou plusieurs des caractéristiques suivantes :
- le bossage a la forme de lignes agencées pour obtenir une pièce de carrosserie sur laquelle la dépression à la forme de lignes horizontales et/ou verticales lorsque la pièce de carrosserie est montée sur un véhicule automobile,
- le moule comprend au moins une cavité et un relief, le bossage étant agencé à la surface du relief de l'empreinte du moule, et
- la cavité a une profondeur comprise entre 0,1 millimètre et 1,5 millimètre.

Enfin, l'invention concerne une pièce de carrosserie obtenue par moulage à l'aide d'un moule selon l'invention.

### Brève description des figures

L'invention sera mieux comprise à la lecture de la description qui va suivre donnée uniquement à titre d'exemple et faite en se référant aux dessins annexés dans lesquels :
[Fig. 1] est une vue de face de l'empreinte d'un moule selon l'invention ;
[Fig. 2] est une vue en coupe de l'empreinte du moule selon un premier mode de réalisation de l'invention suivant un plan de coupe I-I et d'une pièce de carrosserie réalisée à l'aide d'un moule selon ce mode de réalisation ;
[Fig. 3] est une vue en coupe de l'empreinte du moule selon un second mode de réalisation de l'invention suivant un plan de coupe I-I et d'une pièce de carrosserie réalisée à l'aide d'un moule selon ce mode de réalisation ; et
[Fig. 4] est une vue en perspective d'une partie d'une pièce de carrosserie réalisée à l'aide d'un moule selon l'invention.

### Description détaillée

Dans ce qui va suivre, il sera fait référence à des termes d'orientation, tels que « axe longitudinal X », « axe transversal Y », « axe vertical Z », « avant », « arrière », « au-dessus », « supérieure », « en dessous », « inférieure » etc. Ces termes s'entendent par référence à l'orientation usuelle des véhicules automobiles.

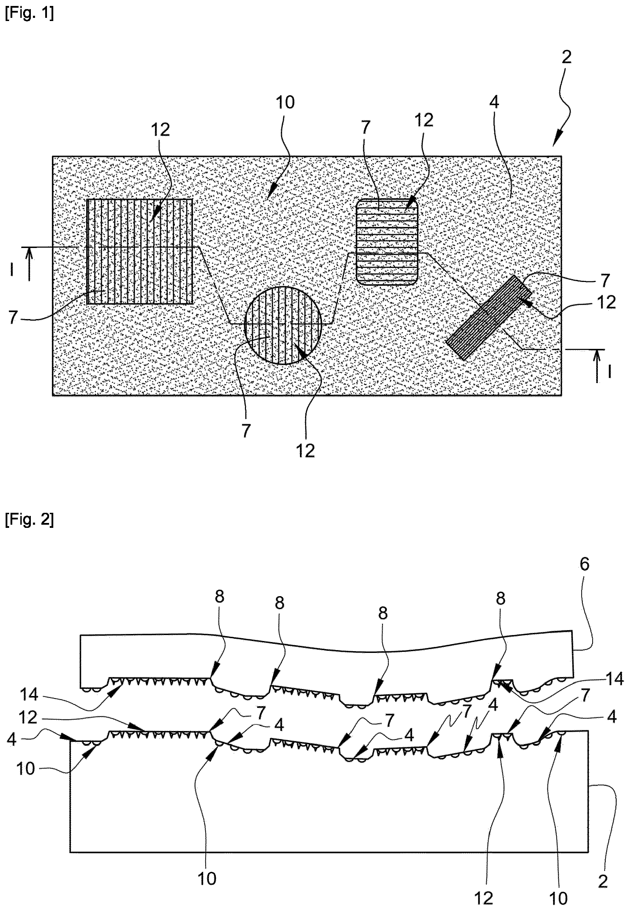

On a représenté sur la figure 1 l'empreinte d'un moule 2 selon l'invention, par exemple la matrice du moule. Comme expliqué ci-dessus, l'empreinte du moule 2 est modifiée de manière à obtenir une pièce de carrosserie comprenant une ou des dépressions donnant une impression de profondeur plus ou moins importante en fonction de la ou des directions dans lesquelles s'étendent ces dépressions.

La première étape du procédé peut, selon un premier mode de réalisation de l'invention illustré à la figure 2, consister à réaliser un usinage du moule 2 afin de réaliser au moins une cavité 4 du moule 2 dans l'empreinte du moule. La réalisation des cavités 4 permet d'obtenir des reliefs 7 (quatre reliefs 7 sur les figures 1 et 2). En d'autres termes, on obtient une empreinte d'un moule comprenant des zones en retrait (les cavités 4) et des zones surélevées par rapport à ces dernières (les reliefs 7).

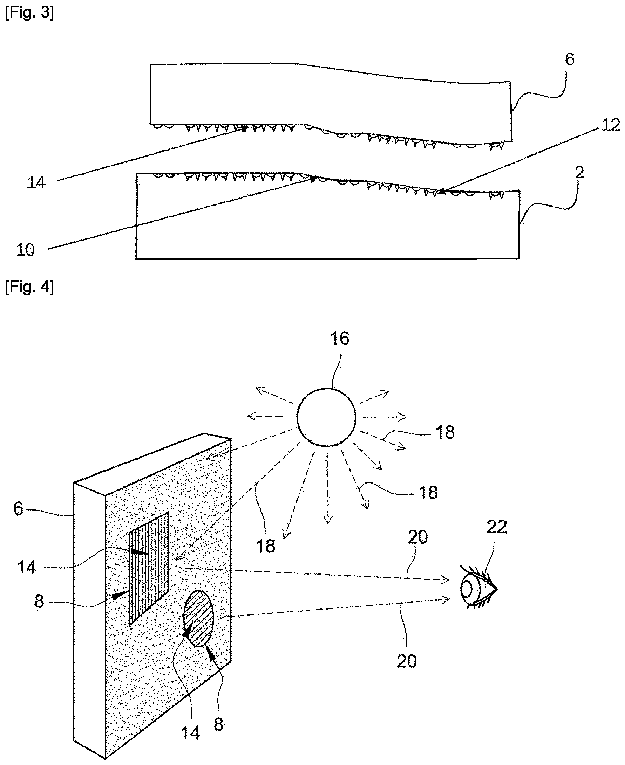

Ces reliefs 7 pourront former sur une pièce de carrosserie 6 moulée dans le moule 2 des zones creuses 8 de la pièce de carrosserie 6 moulée en utilisant le moule 2 (visibles sur la figure 4, il s'agit des négatifs des reliefs 7 réalisés dans le moule 2). Les cavités 4 ont une profondeur de l'ordre de quelques dixièmes de millimètres, de préférence comprises entre 0,1 millimètres et 1,5 millimètres, par exemple égales à 0,5 millimètres. A ce stade, la surface du moule est lisse, ce dernier comprenant uniquement les cavités 4 et les reliefs 7. Cet usinage du moule 2 peut être réalisé par des techniques classiques connues de l'homme du métier.

Selon un second mode de réalisation illustré à la figure 3, cette étape n'est pas réalisée et le ou les grainages décrits par la suite sont réalisés dans une empreinte de moule sur un seul niveau et non deux.

Suite à cette étape, le procédé peut comprendre une première étape de grainage. Cette dernière peut être réalisée par grainage chimique ou encore par électroérosion. Elle peut être réalisée sur l'intégralité de l'empreinte du moule 2 comme cela est visible sur les figures 1 à 3 ou encore seulement au niveau de zones prédéterminées (en protégeant par exemple les zones que l'on souhaite conserver lisses lors de ce grainage). Le choix des zones dans lesquelles est réalisé ce grainage dépend de l'aspect final désiré pour les pièces de carrosseries 6 moulées dans le moule 2. Cela permet d'obtenir une première texture granuleuse composée d'un ensemble de premiers bossages 10 du moule 2 (ces bossages sont donc des irrégularités de la surface, certains bossages sont numérotés sur les figures 1 à 3, le nombre de bossages pouvant être différents de ce qui est représenté sur ces dernières). Les bossages 10 sont représentés sur la figure 2, tant au niveau des cavités 4 que des reliefs 7 et dans l'empreinte du moule sur un même niveau sur la figure 3.

Il serait également possible de réaliser un polissage du moule ou encore un sablage de ce dernier.

Après cette potentielle première étape de grainage, le procédé de modification selon l'invention comprend une seconde étape de grainage réalisée par grainage laser. Cette étape permet de réaliser des seconds bossages 12 du moule 2 (dont certains sont numérotés sur les figures 1 à 3, le nombre de bossages pouvant être différents de ce qui est représenté sur ces dernières). Ces bossages 12 sont visibles sur la figure 2 au niveau des reliefs 7 afin de former, sur une pièce de carrosserie 6 moulée en utilisant le moule 2, des dépressions 14 (correspondants aux négatifs des bossages 12, voir plus loin) à l'intérieur des zones creuses 8. Sur la figure 3, ces bossages 12 sont réalisés dans l'empreinte du moule sur un même niveau, dans des zones comprenant ou non les premiers bossages 10. Ce grainage laser permet de réaliser très précisément, à la surface des reliefs 7 selon le premier mode de réalisation de l'invention, au moins un second bossage 12 du moule 2. Les seconds bossages ont de préférence une taille comprise entre 10 et 100 microns, par exemple égale à 15 microns. En prenant en compte la profondeur des cavités 4, si elles sont présentes, et la hauteur des seconds bossages 12, les variations de hauteur sont relativement faibles (encore plus faibles dans le mode de réalisation illustré à la figure 3), ce qui permet d'éviter de rallonger les temps de cycle lors de la production des pièces de carrosserie 6 ou encore de diminuer le risque d'avoir des pièces de carrosserie 6 comportant un ou plusieurs défauts d'aspect, liés à des variations d'épaisseur à injecter.

L'orientation du ou des second bossages 12 permettra à la pièce de carrosserie 6 d'avoir, selon le premier mode de réalisation de l'invention, une ou plusieurs zones creuses 8 de la pièce de carrosserie 6 comprenant une ou plusieurs dépressions 14 formant un motif et ayant des propriétés optiques telles que mentionnées précédemment ou simplement, selon le second mode de réalisation de l'invention, plusieurs dépressions 14 à la surface de la pièce de carrosserie 6.

En effet, ces seconds bossages 12 du moule 2 permettent, en fonction de leur(s) direction(s) d'extension, d'obtenir une pièce de carrosserie 6 ayant localement la possibilité de piéger ou au contraire de refléter de façon plus prononcée la lumière.

Si la pièce de carrosserie 6 comprend une ou plusieurs dépressions 14 s'étendant en partie verticalement, cette orientation constitue un piège à lumière. La pièce de carrosserie 6 a alors, pour un observateur, un aspect plus sombre, plus mat, avec une impression de profondeur plus importante que la profondeur réelle de la pièce au niveau des dépressions 14. Cela permet d'obtenir une impression de profondeur importante sans avoir à réellement réaliser des dépressions profondes (et donc des seconds bossages 12 du moule 2 plus élevés), ce qui peut conduire à des temps de cycle plus longs avec des risques de retassures ou autres défauts d'aspects sur la pièce de carrosserie 6.

Inversement, si la pièce de carrosserie 6 comprend une ou plusieurs dépressions 14 s'étendant en partie horizontalement, cette orientation constitue une zone renvoyant une grande quantité de lumière. La pièce de carrosserie 6 a alors, pour un observateur, un aspect moins sombre, plus brillant, avec une impression de profondeur moins importante que la profondeur réelle de la pièce. Dans ce cas aussi les motifs contrastent nettement avec le reste de la pièce hors dépression 14.

Cela est visible sur la figure 4. Une source lumineuse 16, en l'occurrence le Soleil, émet des rayons 18 dont certains atteignent la pièce de carrosserie 6. Les rayons lumineux émis 18 atteignant la zone creuse de gauche comprenant des dépressions 14 verticales sont piégés par ces dernières. Ils sont très peu réfléchis (peu de rayons réfléchis 20), d'où une impression de profondeur plus importante et un effet mat prononcé pour un utilisateur 22 observant la pièce de carrosserie 6. Les rayons émis 18 atteignant la zone creuse 8 de droite comprenant des dépressions 14 horizontales réfléchit, par l'intermédiaire de ces dépressions 14, une quantité importante de lumière (nombreux rayons réfléchis 20), d'où une impression de profondeur moins importante et un effet brillant prononcé pour un utilisateur 22 observant la pièce de carrosserie 6. Bien évidemment, le même résultat est obtenu sans les zones creuses, l'impression de profondeur et la matité résultant de la présence des dépressions 14 et de leur direction d'extension.

Il est possible, comme cela est visible sur le motif le plus à droite sur la figure 1, de réaliser des seconds bossages du moule 12 s'étendant en partie dans une direction permettant d'obtenir une pièce de carrosserie 6 comprenant des dépressions 14 s'étendant dans une direction ni horizontale, ni verticale lorsque cette dernière est montée sur un véhicule automobile. En fonction de l'angle choisi, ces dépressions 14 seront plus ou moins capables de piéger ou à l'inverse de réfléchir la lumière afin d'obtenir l'effet optique désiré.

De plus, les seconds bossages 12 du moule 2 peuvent permettre, pour le premier mode de réalisation de l'invention, d'obtenir les dépressions 14 de la pièce de carrosserie qui sont de fait protégées des rayures car elles sont situées dans une ou plusieurs cavités 8 de la pièce de carrosserie 6 (correspondant au reliefs 7).

Selon l'invention, les seconds bossages 12 du moule 2 s'étendent au moins en partie dans une direction permettant d'obtenir une pièce de carrosserie comprenant des dépressions 14 s'étendant au moins en partie verticalement et/ou horizontalement lorsque la pièce de carrosserie est montée sur un véhicule automobile, et cela pour obtenir les effets optiques précités.

Avantageusement, les seconds bossages 12 du moule 2 ont la forme de lignes agencées pour obtenir une pièce de carrosserie 6 sur laquelle les dépressions 14 ont la forme de lignes horizontales et/ou verticales, comme cela est visible sur la figure 3. La zone creuse 8 de la pièce de carrosserie 6 de gauche (avec des dépressions 14 en forme lignes verticales) donnera une impression de profondeur exacerbée ainsi qu'un aspect mat alors que la zone creuse 8 de la pièce de carrosserie 6 de droite (avec des dépressions 14 en forme lignes horizontales) donnera une impression de profondeur moindre ainsi qu'un aspect brillant.

Le grainage laser peut être réalisé en complément du premier grainage, par exemple au niveau des reliefs 7 du moule 2 dans le second mode de réalisation de l'invention, ou dans des zones dans lesquelles le premier grainage n'a pas été réalisé car ces zones étaient protégées au moment du premier grainage. Cela permet d'avoir potentiellement trois textures différentes issues soit du premier grainage seul, soit du grainage laser seul, soit de la combinaison des deux étapes de grainage.

L'invention n'est pas limitée aux modes de réalisation présentés et d'autres modes de réalisation apparaîtront clairement à l'homme du métier. Il est notamment possible de réaliser des motifs ou encore des premiers et seconds bossages du moule différents de ceux illustrés sur les figures et dont le nombre peut varier.

### Liste des références numériques

2 : moule
4 : cavités du moule
6 : pièce de carrosserie
7 : relief du moule
8 : zones creuses de la pièce de carrosserie
10 : premiers bossages
12 : seconds bossages
14 : dépression de la pièce de carrosserie
16 : source lumineuse
18 : rayons lumineux émis
20 : rayons lumineux réfléchis
22 : utilisateur

## Revendications

1. Procédé de modification d'une empreinte d'un moule (2) pour pièces de carrosserie (6), dans lequel on réalise au moins un bossage (12) par grainage laser à la surface de l'empreinte du moule, **caractérisé en ce que** le bossage (12) est agencé pour obtenir une pièce de carrosserie (6) comprenant une dépression (14) s'étendant au moins en partie verticalement et/ou horizontalement lorsque la pièce de carrosserie (6) est montée sur un véhicule automobile.

2. Procédé de modification selon la revendication 1, dans lequel le bossage (12) a la forme de lignes agencées pour obtenir une pièce de carrosserie (6) sur laquelle la dépression (14) à la forme de lignes horizontales et/ou verticales lorsque la pièce de carrosserie (6) est montée sur un véhicule automobile.

3. Procédé de modification selon l'une quelconque des revendications précédentes, dans lequel on réalise, avant le grainage laser, au moins une cavité (4) dans l'empreinte du moule (2), le grainage laser étant réalisé à la surface d'au moins un relief (7) de l'empreinte du moule.

4. Procédé de modification selon la revendication 3, dans lequel la cavité (4) a une profondeur comprise entre 0,1 millimètre et 1,5 millimètre.

5. Procédé de modification selon l'une quelconque des revendications précédentes, dans lequel l'étape de grainage est un second grainage et le bossage (12) est un second bossage, le procédé comprenant avant l'étape du second bossage (12) une étape de réalisation par grainage d'un premier bossage (10) dans l'empreinte du moule (2).

6. Procédé de modification selon la revendication 5, dans lequel le premier bossage (10) est réalisé sur l'intégralité de l'empreinte du moule (2).

7. Procédé de modification selon l'une quelconque des revendications 5 et 6, dans lequel les deux étapes de grainage sont réalisées dans une même zone de l'empreinte du moule (2).

8. Procédé de modification selon la revendication 5, dans lequel les deux étapes de grainage sont réalisées dans des zones différentes de l'empreinte du moule (2).

9. Procédé selon l'une quelconque des revendications 5 à 8, dans lequel la première étape de grainage est réalisée par grainage chimique ou par électroérosion.

10. Moule (2) pour pièces de carrosserie comprenant au moins un bossage (12) réalisé par gravure laser, **caractérisé en ce que** le bossage (12) est agencé pour obtenir une pièce de carrosserie (6) comprenant une dépression (14) s'étendant au moins en partie verticalement et/ou horizontalement lorsque la pièce de carrosserie (6) est montée sur un véhicule automobile.

11. Moule (2) selon la revendication 10, dans lequel le bossage (12) a la forme de lignes agencées pour obtenir une pièce de carrosserie (6) sur laquelle la dépression (14) à la forme de lignes horizontales et/ou verticales lorsque la pièce de carrosserie (6) est montée sur un véhicule automobile.

12. Moule (2) selon l'une quelconque des revendications 10 et 11, le moule (2) comprenant au moins une cavité (4) et un relief (7), le bossage (12) étant agencé à la surface du relief (7) de l'empreinte du moule.

13. Moule (2) selon la revendication 12, dans lequel la cavité (4) a une profondeur comprise entre 0,1 millimètre et 1,5 millimètre.

14. Pièce de carrosserie obtenue par moulage à l'aide d'un moule (2) selon l'une quelconque des revendications 10 à 13.
